# EUROPEAN PATENT APPLICATION

(11) **EP 4 656 911 A1**
(43) Date of publication of application: **03.12.2025**
(21) Application number: 24747206.1
(22) Date of filing: 18.01.2024
(51) Int. Cl.: F16J 15/10

(54) **SEALING DEVICE**

(30) Priority: 25.01.2023 JP 2023009542
(71) Applicant: NOK Corporation, Minato-ku Tokyo 105-8585 (JP)
(72) Inventor: KISHIRO Masamichi, Fukushima-shi, Fukushima 960-1193 (JP); MEGURO Naoki, Fukushima-shi, Fukushima 960-1193 (JP)
(74) Representative: TBK
(86) International application number: PCT/JP2024/001352
(87) International publication number: WO 2024/157877

(57) **Abstract**

A sealing device (1) includes an elastic body portion (2) that is annular and is formed with an elastic body. The elastic body portion (2) has a seal lip (10) which is annular. The seal lip (10) contacts a guide member (102) inserted into the seal lip (10). An interference (α) of the seal lip (10) with respect to the guide member (102) inserted into the seal lip (10) has such a size that insertion of the guide member (102) into the seal lip (10) becomes easy. The seal lip (10) is a tubular portion extending along an axis line (x).

## Description

### Technical Field

The present invention relates to a sealing device.

### Background Art

For example, in some electronic apparatuses and electronic components, a cooling mechanism for cooling is provided because a temperature rises due to heat generation. For example, in an internal portion of an inverter device mounted on a motor as a drive source, a cooling device for cooling the inverter device to be subjected to a high temperature is provided. Such a cooling device has a guide member such as a pipe which guides a cooling liquid, the guide member is coupled to the cooling device, and a guide passage is thereby formed. In a connection portion between the guide member and the guide member in the guide passage, in order to prevent leakage of the cooling liquid, a seal as a sealing device is provided (for example, see Patent Literature 1).

### Citation List

### Patent Literature

Patent Literature 1: Japanese Patent Laid-Open No. 2020-13830

### Summary of Invention

### Technical Problem

In some guide passages in such a cooling device, a pipe portion of one guide member is coupled to an opening portion of another guide member. In such a connection portion, in a case where the pipe portion is eccentric to the opening portion due to manufacturing tolerance or assembling tolerance, there can be a case where a seal lip is deformed and sealing performance lowers. To handle such a case, a configuration is possible in which an interference of the seal lip is increased, but when the interference of the seal lip is increased, force necessary for inserting the pipe portion into a seal becomes large. When the force necessary for inserting the pipe portion into the seal becomes large, there can be a case where an improvement in a mounting condition (mounting performance) of the seal on the pipe portion is demanded.

As described above, in related art, a configuration which can prevent lowering of the mounting performance of the seal while preventing lowering of sealing performance has been demanded for the seal for a connection portion of the guide members in the guide passage.

The present invention has been made in consideration of the above problems, and an object thereof is to provide a sealing device that can prevent lowering of mounting performance while preventing lowering of sealing performance.

### Solution to Problem

For achieving the above object, a sealing device according to the present invention is a sealing device for sealing a portion between a first guide member as a member which guides a fluid and a second guide member as a member which has an opening portion housing the first guide member and guides the fluid, the sealing device including an elastic body portion as a portion that is annular around an axis line and is formed with an elastic body, in which the elastic body portion has a seal lip as a portion which is annular around the axis line, the seal lip is configured to contact the first guide member inserted into the seal lip, an interference of the seal lip with respect to the first guide member inserted into the seal lip has such a size that insertion of the first guide member into the seal lip becomes easy, and the seal lip is a tubular portion extending along the axis line.

In the sealing device according to one aspect of the present invention, a length of the seal lip in the axis line direction is longer than a size of foreign matter potentially present between the first guide member inserted into the seal lip and the seal lip.

In the sealing device according to one aspect of the present invention, the seal lip extends in parallel with the axis line.

In the sealing device according to one aspect of the present invention, the seal lip is a cylindrical portion with the axis line as a central axis.

In the sealing device according to one aspect of the present invention, the foreign matter includes at least either one of spherical foreign matter and fibrous foreign matter.

In the sealing device according to one aspect of the present invention, the interference and a thickness of the seal lip are set such that insertion of the first guide member into the seal lip becomes easy.

In the sealing device according to one aspect of the present invention, the interference and the thickness of the seal lip are set such that when the seal lip is deformed and a center of an end portion, which opens, of the seal lip is deviated from the axis line, insertion of the first guide member into the seal lip becomes easy.

In the sealing device according to one aspect of the present invention, the elastic body portion has a support portion as a portion for exerting tightening force on the seal lip.

In the sealing device according to one aspect of the present invention, the support portion is provided as a plurality of ribs extending along the axis line.

In the sealing device according to one aspect of the present invention, the elastic body portion has a root portion as a portion in which the seal lip protrudes, the root portion is annular around the axis line, and a thickness of the root portion is larger than a thickness of the seal lip.

In the sealing device according to one aspect of the present invention, the elastic body portion has a gasket portion as a portion which is annular around the axis line and contacts the opening portion, and the seal lip is positioned on an inner periphery side relative to the gasket portion.

In the sealing device according to one aspect of the present invention, the first guide member and the second guide member are members of a cooling device for an inverter device.

### Advantageous Effects of Invention

A sealing device according to the present invention can prevent lowering of mounting performance while preventing lowering of sealing performance.

### Brief Description of Drawings

[Figure 1] Figure 1 is a partial perspective view illustrating a part of a sealing device according to an embodiment of the present invention.
[Figure 2] Figure 2 is a cross-sectional view illustrating one of cross sections along an axis line of the sealing device illustrated in Figure 1.
[Figure 3] Figure 3 is a partial cross-sectional view illustrating the vicinity of a cross section of a seal lip in the sealing device illustrated in Figure 2.
[Figure 4] Figure 4 is a view illustrating a part of an elastic body portion in a state where a center of an internal end of the seal lip is deviated from an axial center of the sealing device.
[Figure 5] Figure 5 is a cross-sectional view illustrating the sealing device in a usage state.
[Figure 6] Figure 6 is a cross-sectional view illustrating a situation in a case where a guide member is inserted into an internal space of the seal lip.
[Figure 7] Figure 7 is a view illustrating a situation where the guide member is inserted into the internal space of the seal lip in which a center of a root end is deviated from the axis line.
[Figure 8] Figure 8 is a partial perspective view illustrating a part of a sealing device according to a second embodiment of the present invention.
[Figure 9] Figure 9 is a partial perspective view illustrating a part of a sealing device according to a modification example of the sealing device according to the second embodiment of the present invention.

### Description of Embodiments

Embodiments of the present invention will hereinafter be described with reference to the drawings.

A sealing device according to the present invention is a sealing device for sealing a portion between a first guide member as a member which guides a fluid and a second guide member as a member which has an opening portion housing the first guide member and guides the fluid. The first guide member is a pipe passage, for example, and the second guide member is a pipe passage or a container which has an opening portion housing an end portion of another pipe passage, for example. Further, the fluid is a cooling liquid to be used for cooling, for example, and the first guide member and the second guide member are members which form a guide passage of a cooling device. The cooling device is a cooling device for an inverter device, for example. A sealing device 1 according to the embodiment of the present invention is used for sealing a portion between the first guide member and a second member as members of the cooling device for the inverter device. Note that an application target of the sealing device according to the present invention is not limited to a cooling device for an inverter device or a cooling device, and the sealing device may be used for another device.

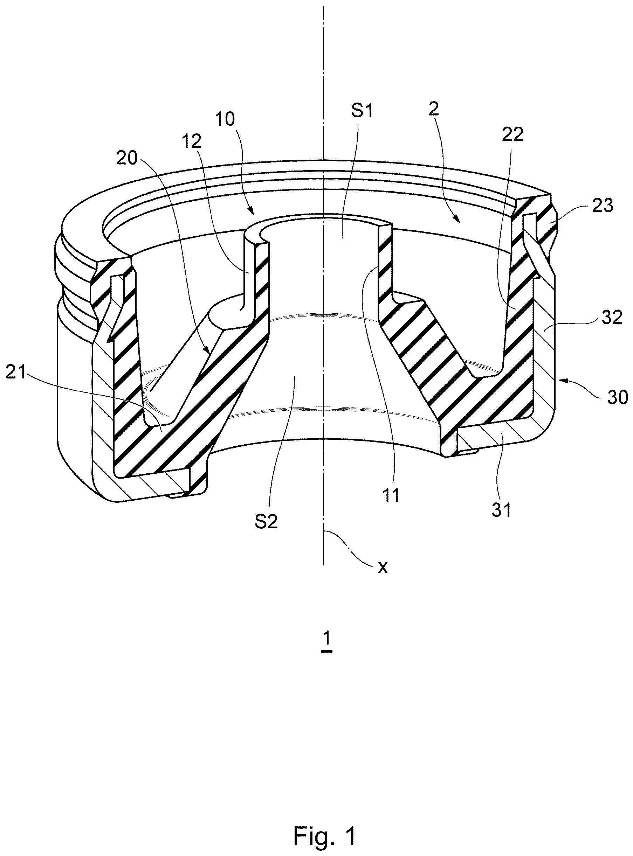

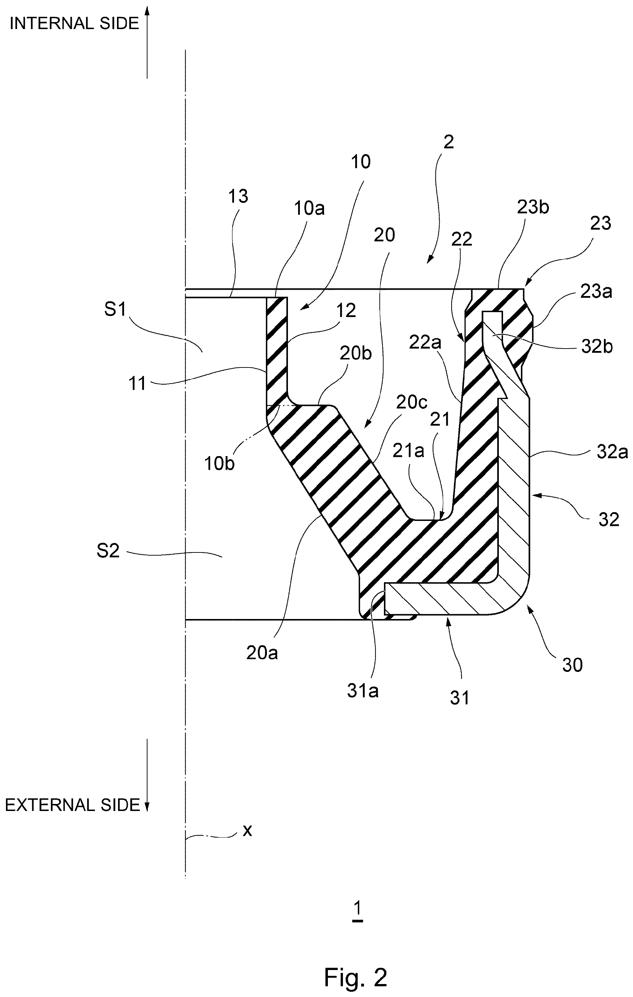

Figure 1 is a partial perspective view illustrating a part of the sealing device 1 according to the embodiment of the present invention, and Figure 1 illustrates a part of the sealing device 1 which is cut in a plane along an axis line x. Further, Figure 2 is a cross-sectional view illustrating one of cross sections along the axis line x of the sealing device 1, and Figure 2 illustrates a cross section of the sealing device 1 on one side with respect to the axis line x. As illustrated in Figures 1 and 2, the sealing device 1 includes an elastic body portion 2 as a portion which is annular around the axis line x and is formed with an elastic body. The elastic body portion 2 has a seal lip 10 as a portion which is annular around the axis line x. The seal lip 10 contacts the first guide member inserted into the seal lip 10. An interference α of the seal lip 10 with respect to the first guide member inserted into the seal lip 10 has such a size that insertion of the first guide member into the seal lip 10 becomes easy. The seal lip 10 is a tubular portion extending along the axis line x. Hereinafter, a configuration of the sealing device 1 will specifically be described.

As illustrated in Figures 1 and 2, for example, the sealing device 1 has a reinforcement ring 30 for reinforcing the elastic body portion 2. The reinforcement ring 30 is a member which is mounted on the elastic body portion 2 so as to cover the elastic body portion 2 and is a member which has annular rigidity around the axis line x. The reinforcement ring 30 is a member formed of metal or resin, for example. Further, the reinforcement ring 30 has a circular ring portion 31 and a tubular portion 32 which extends from the circular ring portion 31, for example. The circular ring portion 31 is a portion which expands around the axis line x in a circular ring shape or a generally circular ring shape and is a portion which has the axis line x as a central axis or a generally central axis and has a hollow disk shape, for example. The tubular portion 32 is a tubular portion extending along the axis line x and is a portion which has the axis line x as a central axis or a generally central axis and has a cylindrical shape or a generally cylindrical shape, for example. The tubular portion 32 extends from an end of the circular ring portion 31 on an outer periphery side. The tubular portion 32 has an outer peripheral surface 32a which faces the outer periphery side, and as described later, the tubular portion 32 has shape and diameter which correspond to an inner peripheral surface of the opening portion such that in a usage state of the sealing device 1, the axis line x of the sealing device 1 agrees or generally agrees with an axis line of the opening portion of the second guide member. The shape of tubular portion 32 is a cylindrical shape or a generally cylindrical shape which has the axis line x as a central axis or a generally central axis, for example. In a tip end portion 32b as a portion of the tubular portion 32 on a tip end side, a diameter is smaller than that of the outer peripheral surface 32a of the tubular portion 32. The diameter of the outer peripheral surface 32a of the tubular portion 32 is set to, for example, such a size that the outer peripheral surface 32a is pressed onto the inner peripheral surface of the opening portion in the usage state, which will be described later, where the sealing device 1 is mounted on the opening portion of the second guide member of the application target. Accordingly, in the usage state, by fitting between metals, the sealing device 1 is fixed to the application target, and a portion between the application target and the sealing device 1 is tightly closed. The reinforcement ring 30 is integrally formed of the same material, and the circular ring portion 31 and the tubular portion 32 are portions of the reinforcement ring 30 which is integrally formed.

As illustrated in Figures 1 and 2, the elastic body portion 2 has a root portion 20 in addition to the seal lip 10, for example. The root portion 20 is a portion in which the seal lip 10 protrudes. Further, as illustrated in Figures 1 and 2, for example, the elastic body portion 2 has a base portion 21, a cover portion 22, and a gasket portion 23.

The seal lip 10 forms an internal space S1, which extends in an axis line x direction, in an internal portion and extends in parallel with the axis line x as illustrated in Figures 1 and 2, for example. Specifically, for example, the seal lip 10 extends in a cylindrical shape or a generally cylindrical shape which has the axis line x as a central axis or a generally central axis, and a seal surface 11 as an inner peripheral surface of the seal lip 10, which demarcates the internal space S1, is a cylindrical surface or a generally cylindrical surface which has the axis line x as a central axis or a generally central axis. Further, an outer peripheral surface 12 which is facing away from the seal surface 11 and which is a surface of the seal lip 10, the surface facing the outer periphery side, is a cylindrical surface or a generally cylindrical surface which has the axis line x as a central axis or a generally central axis, for example. An opening 13 is formed at an end (internal end 10a) of the seal lip 10 on an internal side (an upper side in Figure 2) in the axis line x direction, and the internal space S1 of the seal lip 10 is open to an outside at the internal end 10a. The seal lip 10 is coupled to the root portion 20 at an end (root end 10b) on an external side (a lower side in Figure 2) in the axis line x direction, and the internal space S1 of the seal lip 10 communicates with an internal space S2 of the root portion 20.

As illustrated in Figures 1 and 2, the root portion 20 is a portion, which is annular around the axis line x, and extends along the axis line x in a tubular shape, for example. Specifically, for example, the root portion 20 is reduced in diameter as progresses toward the seal lip 10 side along the axis line x and has a conical tubular or generally conical tubular shape which has the axis line x as a central axis or a generally central axis, for example. An inner peripheral surface 20a which demarcates the internal space S2 of the root portion 20 is smoothly coupled to the seal surface 11 of the seal lip 10. Note that the inner peripheral surface 20a of the root portion 20 does not have to be smoothly coupled to the seal surface 11 of the seal lip 10. A thickness of the root portion 20 is larger than a thickness of the seal lip 10. The root portion 20 has an annular surface (end surface 20b), which faces the internal side, at an end on the internal side, and the seal lip 10 protrudes from the end surface 20b.

As illustrated in Figures 1 and 2, the base portion 21 is a portion, which is annular around the axis line x, and is a circular-ring-shaped portion extending from an end of the root portion 20 on the external side to the outer periphery side. As illustrated in Figures 1 and 2, the cover portion 22 is a portion, which is annular around the axis line x, and extends from an end of the base portion 21 on the outer periphery side to the internal side. In an end portion of the cover portion 22 on the internal side, the gasket portion 23 is provided which protrudes from the cover portion 22 to the outer periphery side. Further, the gasket portion 23 has a seal surface 23a as a surface facing the outer periphery side, and the seal surface 23a forms a cylindrical surface or a generally cylindrical surface which has the axis line x as a central axis or a generally central axis, for example.

The base portion 21, the cover portion 22, and the gasket portion 23 of the elastic body portion 2 are mounted on the reinforcement ring 30 so as to cover the reinforcement ring 30. For example, the base portion 21, the cover portion 22, and the gasket portion 23 are adhered to the reinforcement ring 30. Specifically, for example, the base portion 21 covers the circular ring portion 31 so as to cover, from the internal side, an end portion (inner periphery end 31a), on the inner periphery side, of the circular ring portion 31 of the reinforcement ring 30. Further, the cover portion 23 covers the tubular portion 32 of the reinforcement ring 30 from the inner periphery side, and the gasket portion 23 covers, from the outer periphery side, the tip end portion 32b of the tubular portion 32 of the reinforcement ring 30. The diameter of the seal surface 23a of the gasket portion 23 is set to such a size that the seal surface 23a is pressed onto the inner peripheral surface of the opening portion in the usage state, which will be described later, where the sealing device 1 is mounted on the opening portion of the second guide member of the application target. Accordingly, in the usage state, the gasket portion 23 is compressed between the tip end portion 32b of the tubular portion 32 of the reinforcement ring 30 and the opening portion, the sealing device 1 is fixed to the application target, and the portion between the application target and the sealing device 1 is tightly closed.

As illustrated in Figures 1 and 2, in the elastic body portion 2, the seal lip 10 is positioned on the inner periphery side relative to the gasket portion 23, for example. Specifically, for example, the internal end 10a of the seal lip 10 is positioned at the same or generally the same position as a tip end 23b of the gasket portion 23 in the axis line x direction and is not positioned on the internal side relative to the gasket portion 23. Note that the internal end 10a of the seal lip 10 does not have to be positioned at the same position as the tip end 23b of the gasket portion 23 in the axis line x direction. For example, the internal end 10a of the seal lip 10 may be positioned on the internal side relative to the tip end 23b of the gasket portion 23 in the axis line x direction, and the internal end 10a of the seal lip 10 may be positioned on the external side relative to the tip end 23b of the gasket portion 23.

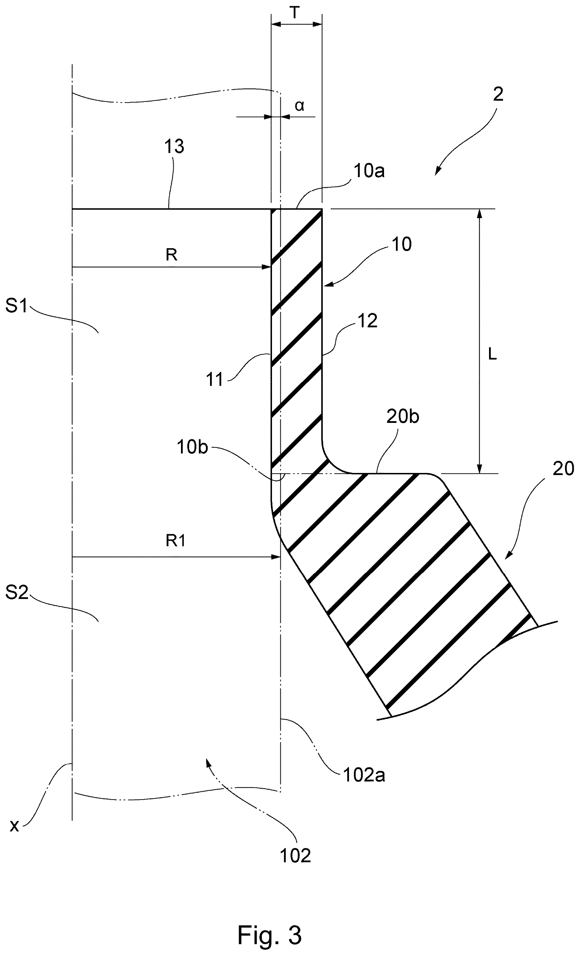

Figure 3 is a partial cross-sectional view illustrating the vicinity of a cross section of the seal lip 10, the cross section being illustrated in Figure 2. Note that in Figure 3, a part of the first guide member (guide member 102) which is housed in the internal space S1 of the seal lip 10 in the usage state as described later is indicated by virtual lines. A radius (radius R) of the seal surface 11 of the seal lip 10 has a predetermined size, a length L of the seal lip 10 is a predetermined length, and a thickness T of the seal lip 10 is a predetermined thickness. The radius R of the seal surface 11 is a distance between the axis line x and the seal surface 11 in a direction orthogonal to the axis line x (radial direction). A length of the seal lip 10 is a width of the seal lip 10 in the axis line x direction and is a distance between the internal end 10a and the root end 10b of the seal lip 10 in the axis line x direction. Further, the thickness T of the seal lip 10 is a width of the seal lip 10 in the radial direction and is a distance between the seal surface 11 of the seal lip 10 and the outer peripheral surface 12 in the axis line x direction.

As described later, in the sealing device 1 in the usage state where the sealing device 1 is mounted on the application target, the first guide member (guide member 102) is inserted into the internal space S1 of the seal lip 10, the seal surface 11 of the seal lip 10 contacts the first guide member, and a portion between the seal lip 10 and the first guide member is thereby tightly closed. As described above, the interference α of the seal lip 10 has such a size that force necessary for inserting the first guide member into the internal space S1 of the seal lip 10 becomes a predetermined value (insertion force F1). A magnitude of the insertion force F1 of the predetermined value can be various magnitudes which facilitate insertion of the first guide member into the internal space S1 of the seal lip 10, for example, and can be set to various values. The interference α is set smaller than a standard interference in related art, for example. Note that the interference α is a difference between a radius (radius R1) of an outer peripheral surface (outer peripheral surface 102a) of the first guide member (guide member 102), which the seal surface 11 contacts in the usage state, and the radius R of the seal surface 11 (see Figure 3).

The length L of the seal lip 10 is set in reference to foreign matter, for example. There are cases where in the sealing device 1 in the usage state, foreign matter is present between the seal surface 11 of the seal lip 10 and the first guide member. The foreign matter can include all articles which can be present between the seal surface 11 and the first guide member in the sealing device 1 in the usage state. Examples of the foreign matter includes articles which can unintentionally be attached to the first guide member and the seal surface 11 of the seal lip 10 when the first guide member is inserted into the seal lip 10, such as dust, trash, fine particles, and fine fibers, and articles which can unintentionally be present between the first guide member and the seal surface 11.

The length L of the seal lip 10 is longer than the size of such foreign matter which can be present between the first guide member and the seal surface 11 in the sealing device 1 in the usage state. Such foreign matter includes at least any of spherical foreign matter and fibrous foreign matter. For example, in a case where a size (diameter) of the spherical foreign matter is 1 mm, the length L of the seal lip 10 is longer than 1 mm, for example. Further, for example, in a case where a size (length) of the fibrous foreign matter is 1 mm, the length L of the seal lip 10 is longer than 1 mm, for example. Further, for example, in a case where the size (length) of the fibrous foreign matter is 2 mm, the length L of the seal lip 10 is longer than 2 mm, for example. Note that the foreign matter changes in accordance with a usage form of the sealing device 1, and the size of the foreign matter similarly changes in accordance with the usage form of the sealing device 1. Thus, the length L of the seal lip 10 can be various values in accordance with the usage form of the sealing device 1. Further, an upper limit of the length L of the seal lip 10 can be various values in accordance with the application target of the sealing device 1, the usage form of the sealing device 1, and so forth.

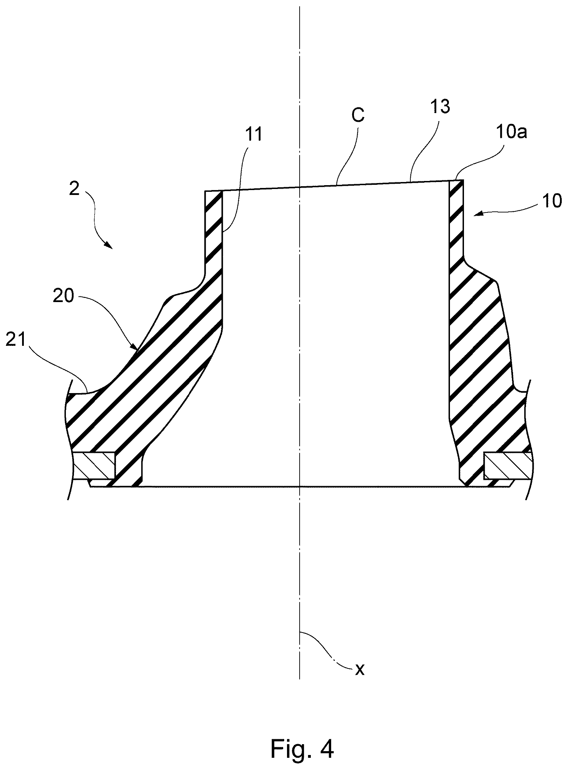

Further, the interference α of the seal lip 10 and the thickness T of the seal lip 10 are set such that the force necessary for inserting the first guide member into the internal space S1 of the seal lip 10 becomes a predetermined value (insertion force F2), for example. A magnitude of the insertion force F2 of the predetermined value can be various magnitudes which facilitate insertion of the first guide member into the internal space S1 of the seal lip 10, for example, and can be set to various values. For example, the interference α is set smaller than the standard interference in related art, and the thickness T is set smaller than a standard thickness of a seal lip in related art. Further, the interference α of the seal lip 10 and the thickness T of the seal lip 10 are set such that when the seal lip 10 is deformed and a center C of the root end 10b of the seal lip 10 is deviated (becomes eccentric) from the axis line x (see Figure 4), the force necessary for inserting the first guide member into the internal space S1 of the seal lip 10 becomes a predetermined value (insertion force F3), for example. A magnitude of the insertion force F3 of the predetermined value can be various magnitudes which facilitate insertion of the first guide member into the internal space S1 of the seal lip 10 which has been subjected to deformation such as eccentricity, for example, and can be set to various values. For example, the interference α is set smaller than the standard interference in related art, and the thickness T is set smaller than the standard thickness of the seal lip in related art.

Further, the interference α of the seal lip 10 and the thickness T of the seal lip 10 are set such that a pressure on a contact surface between the seal lip 10 and the first guide member becomes a predetermined pressure (pressure P1). A magnitude of the pressure P1 of the predetermined value can be various magnitudes at which tight closure between the seal surface 11 of the seal lip 10 and the first guide member inserted into the internal space S1 exhibits predetermined sealing performance or is assumed to exhibit the predetermined sealing performance, for example, and can be set to various values. Further, the interference α of the seal lip 10 and the thickness T of the seal lip 10 are set such that when the seal lip 10 becomes eccentric (see Figure 4), the pressure on the contact surface between the seal lip 10 and the first guide member becomes a predetermined pressure (pressure P2), for example. A magnitude of the pressure P2 of the predetermined value can be various magnitudes at which tight closure between the seal surface 11 of the seal lip 10 and the first guide member inserted into the internal space S1 exhibits predetermined sealing performance or is assumed to exhibit the predetermined sealing performance, for example, and can be set to various values.

The elastic body portion 2 is a member which is integrally formed of the same elastic material, the seal lip 10, the root portion 20, the base portion 21, the cover portion 22, and the gasket portion 23 are portions of the elastic body portion 2 which is integrally formed and are integrally coupled together. The elastic body portion 2 is formed with an elastic body and is integrally molded by performing crosslinking adhesion of an elastic material to the reinforcement ring 30, for example. The elastic body portion 2 is a molded body which is obtained by insert molding using the reinforcement ring 30 as an insert component, for example.

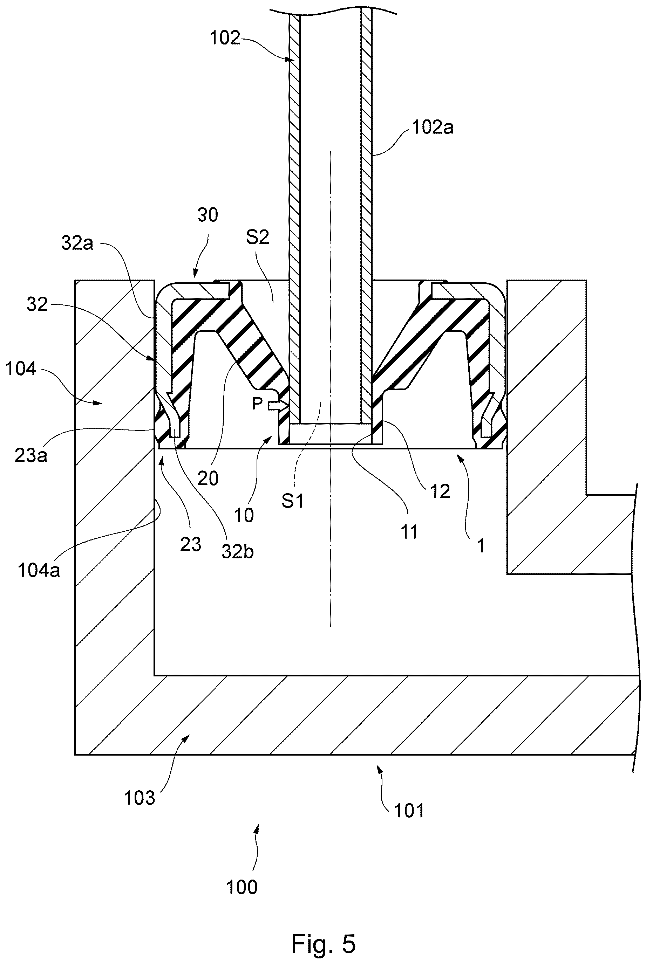

Next, a description will be made about working of the sealing device 1 having the above-described configuration. Figure 5 is a cross-sectional view illustrating the sealing device 1 in the usage state. The first guide member is inserted into the internal space S1 of the seal lip 10, the seal surface 11 of the seal lip 10 contacts the first guide member, the sealing device 1 is fitted into the opening portion of the second guide member, the seal surface 23a of the gasket portion 23 and the outer peripheral surface 32a of the tubular portion 32 contact the opening portion, and the sealing device 1 thereby becomes the usage state. In the present embodiment, the application target of the sealing device 1 is set to a cooling passage 101 of a cooling device 100 of an inverter. In the cooling passage 101, the first guide member is the guide member 102 as one member forming the cooling passage 101, and the second guide member is a guide member 103 as one member forming the cooling passage 101. The cooling passage 101 is a guide passage which guides a cooling liquid into the inverter, and the guide members 102 and 103 are members which guide the cooling liquid in a part of the cooling passage 101 and are pipes and containers, for example. The first guide member 103 has an opening portion 104 which receives an end portion of the guide member 102.

As illustrated in Figure 5, in the sealing device 1 in the usage state, the guide member 102 is housed in the internal space S1 of the seal lip 10, the seal surface 11 of the seal lip 10 contacts the outer peripheral surface 102a of the guide member 102, and a portion between the seal lip 10 and the guide member 102 is thereby tightly closed. Further, the sealing device 1 is housed in the opening portion 104 of the guide member 103, the outer peripheral surface 32a of the tubular portion 32 of the reinforcement ring 30 contacts an inner peripheral surface 104a of the opening portion 104, the seal surface 23a of the gasket portion 23 contacts the inner peripheral surface 104a of the opening portion 104, and a portion between the tubular portion 32 and gasket portion 23 and the opening portion 104 is thereby tightly closed. The outer peripheral surface 32a of the tubular portion 32 of the reinforcement ring 30 has a shape corresponding to the inner peripheral surface 104a of the opening portion 104 as described above, and as for the sealing device 1, in the opening portion 104, a central axis of the opening portion 104 agrees or generally agrees with the axis line x of the sealing device 1. In such a manner, the sealing device 1 seals a gap in a connection region between the guide member 102 and the guide member 103, and the guide member 102 and the guide member 103 are thereby connected together.

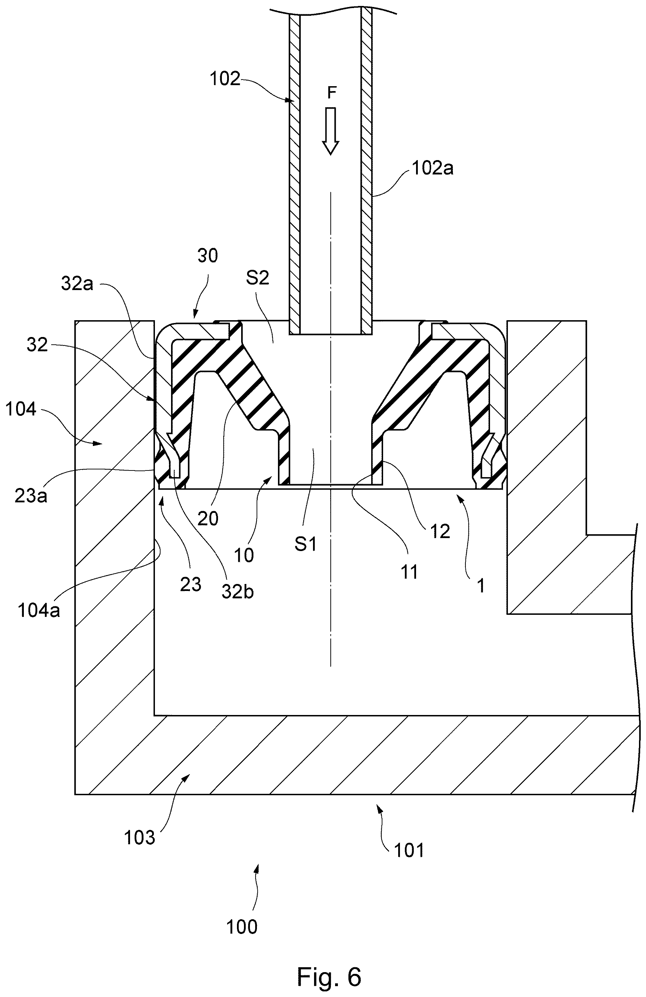

Figure 6 is a cross-sectional view illustrating a situation in a case where the guide member 102 is inserted into the internal space S1 of the seal lip 10. As described above, the interference α of the seal lip 10 is set such that force (insertion force F) necessary for inserting the guide member 102 into the internal space S1 becomes the insertion force F1 of a predetermined magnitude, which facilitates insertion of the guide member 102 into the internal space S1. Accordingly, the insertion force F can be made small, and insertion of the guide member 102 into the internal space S1 of the seal lip 10 becomes easy. Note that the insertion force F1 of the predetermined magnitude may be one value or may be a range.

Further, as described above, the interference α of the seal lip 10 and the thickness T of the seal lip 10 are set such that the force (insertion force F) necessary for inserting the guide member 102 into the internal space S1 of the seal lip 10 becomes the insertion force F2 of a predetermined magnitude, which facilitates insertion of the guide member 102 into the internal space S1. As described above, the insertion force F2 is a value which is set in consideration of not only the interference α of the seal lip 10 but also the thickness T of the seal lip 10. Accordingly, the insertion force can be made smaller, and insertion of the guide member 102 into the internal space S1 of the seal lip 10 becomes easier.

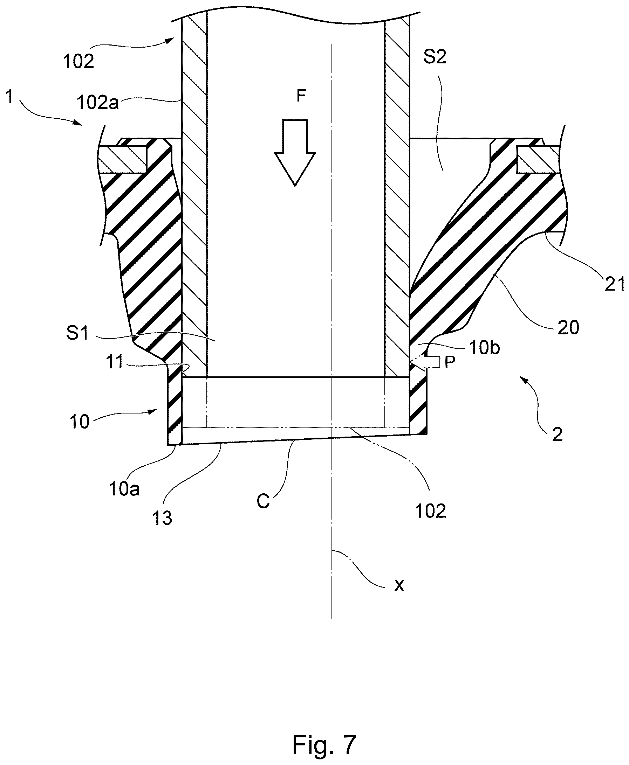

Figure 7 is a view illustrating a situation where the guide member 102 is inserted into the internal space S1 of the seal lip 10 in which the center C of the root end 10b is deviated (becomes eccentric) from the axis line x. In the cooling device 100, there can be a case where a deviation occurs between a central axis of the guide member 102 and a central axis (axis line x) of the opening portion 104 of the guide member 103 due to manufacturing tolerance or assembling tolerance of each configuration member of the cooling passage 101. In this case, as illustrated in Figure 7, when the guide member 102 is inserted into the internal space S1 of the seal lip 10, the center C of the root end 10b is deviated from the axis line x, and the guide member 102 is inserted into this eccentric seal lip 10. As described above, the interference α of the seal lip 10 and the thickness T of the seal lip 10 are set such that the force (insertion force F) necessary for inserting the guide member 102 into the internal space S1 of the seal lip 10 in which the center C of the root end 10b is deviated from the axis line x and eccentricity occurs becomes the insertion force F3 of a predetermined magnitude, which facilitates insertion of a guide member 2 into the internal space S1. Accordingly, even when the guide member 102 is inserted into the internal space S1 of the seal lip 10 in which the center C of the root end 10b is deviated from the axis line x, insertion is easy.

Further, the length L of the seal lip 10 is longer than a length, in the axis line x direction, of foreign matter which is present between the seal surface 11 of the seal lip 10 and the outer peripheral surface 102a of the guide member 102 in the sealing device 1 in the usage state. Thus, the foreign matter present between the seal surface 11 and the outer peripheral surface 102a of the guide member 102 is prevented from passing through a contact surface between the seal surface 11 and the outer peripheral surface 102a in the axis line x direction. As described above, even when a pressure on the contact surface between the seal lip 10 and the guide member 102 is low, the seal lip 10 can prevent lowering of the sealing performance for foreign matter.

Further, as described above, the interference α of the seal lip 10 and the thickness T of the seal lip 10 are set such that a pressure (contact surface pressure P) on the contact surface between the seal surface 11 of the seal lip 10 and the outer peripheral surface 102a of the guide member 102 in the usage state becomes the pressure P1 of a predetermined magnitude at which the seal lip 10 exhibits the predetermined sealing performance. Thus, the seal lip 10 exhibits desired sealing performance in the usage state. Further, as described above, the interference α of the seal lip 10 and the thickness T of the seal lip 10 are set such that the pressure P (see Figure 7) on the contact surface between the seal surface 11 of the seal lip 10, which is eccentric, and the outer peripheral surface 102a of the guide member 102 in the usage state becomes the pressure P2 of a predetermined magnitude at which the seal lip 10 exhibits the predetermined sealing performance. Thus, even in a case where a deviation is occurring between the central axis of the guide member 102 and the central axis of the opening portion 104 of the guide member 103 in the cooling passage 101, the seal lip 10 provides desired sealing performance.

As described above, the interference α of the seal lip 10 and the thickness T of the seal lip 10 are set based on correlations among eccentricity followability, shaft insertability, and a contact surface pressure such that those eccentricity followability, shaft insertability, and contact surface pressure of the seal lip 10 become suitable. Thus, even when mounting of the guide member 102 on the seal lip 10 is made easy, the sealing device 1 does not lower the sealing performance of the seal lip 10. Note that the eccentricity followability represents performance for maintaining a region of the seal surface 10 which contacts the outer peripheral surface 102a of the guide member 102 when the seal lip 10 becomes eccentric. Further, the shaft insertability represents performance of the seal lip 10 for insertion of the guide member 102 into the internal space S1.

Further, in the sealing device 1, the root portion 20 thicker than the seal lip 10 forms the internal space S2 which communicates with the guide member 102. Thus, rigidity of the root portion 20 is higher than rigidity of the seal lip 10, and the root portion 20 is less likely to be deformed in a case where an inside of the cooling passage 101 is at a negative pressure. Accordingly, a case can be prevented where the seal lip 10 is deformed due to deformation of the root portion 20, a portion between the seal surface 11 and the outer peripheral surface 102a of the guide member 102 opens, and the sealing performance is lowered.

As described above, the sealing device 1 according to a first embodiment of the present invention can prevent lowering of mounting performance while preventing lowering of the sealing performance.

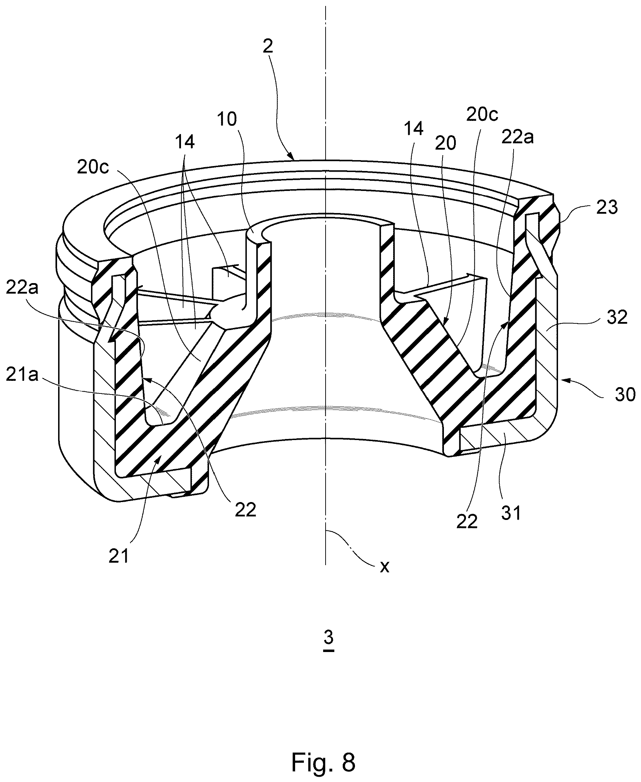

Next, a sealing device 3 according to a second embodiment of the present invention will be described. Figure 8 is a partial perspective view illustrating a part of the sealing device 3 according to the second embodiment of the present invention, and Figure 8 illustrates a part of the sealing device 3 which is cut in a plane along the axis line x. As illustrated in Figure 8, the sealing device 3 is different from the above-described sealing device 1 in the point that the elastic body portion 2 has support portions 14 as portions for exerting tightening force on the seal lip 10. Hereinafter, as for a configuration of the sealing device 3, the same reference characters will be given to the same configurations as those of the above-described sealing device 1 and configurations having similar functions to those of the above-described sealing device 1, descriptions thereof will be skipped, and different configurations will be described.

As illustrated in Figure 8, specifically, the sealing device 3 has ribs 14 as a plurality of support portions which extend along the axis line x. The rib 14 is a plate-shaped portion extending along a plane including the axis line x, for example. In the sealing device 3, the plurality of ribs 14 are provided at equal angular intervals or generally equal angular intervals around the axis line x, for example. Further, the rib 14 extends among an outer peripheral surface 20c of the root portion 20, an inner peripheral surface 22a of the cover portion 22, and an inner side surface 21a of the base portion 21. Note that the outer peripheral surface 20c of the root portion 20 is a surface of the root portion 20 which faces the outer periphery side, the inner peripheral surface 22a of the cover portion 22 is a surface of the cover portion 22 which faces the inner periphery side, and the inner side surface 21a of the base portion 21 is a surface of the base portion 21 which faces the internal side.

In the sealing device 3 according to the present embodiment, the rib 14 supports the root portion 20 from the outer periphery side and pushes the root portion 20 in a direction toward the axis line x. Accordingly, in the usage state, tightening force, which causes the seal lip 10 to follow the guide member 102 subjected to a displacement such as eccentricity, occurs in the seal lip 10. Thus, followability of the seal lip 10 to the guide member 102 can be improved. Accordingly, even in a case where a deviation is occurring between the central axis of the guide member 102 and the central axis of the opening portion 104 of the guide member 103 in the cooling passage 101, the sealing performance of the seal lip 10 can be inhibited from lowering. Further, because the root portion 20 is supported by the ribs 14, rigidity of the root portion 20 can be enhanced, the root portion 20 is less likely to be deformed even when the root portion 20 receives a pressure of the fluid, and pressure resistance of the root portion 20 can be improved. Accordingly, pressure resistance of the seal lip 10 can be improved. Further, the sealing device 3 exhibits working and effects of the above-described sealing device 1.

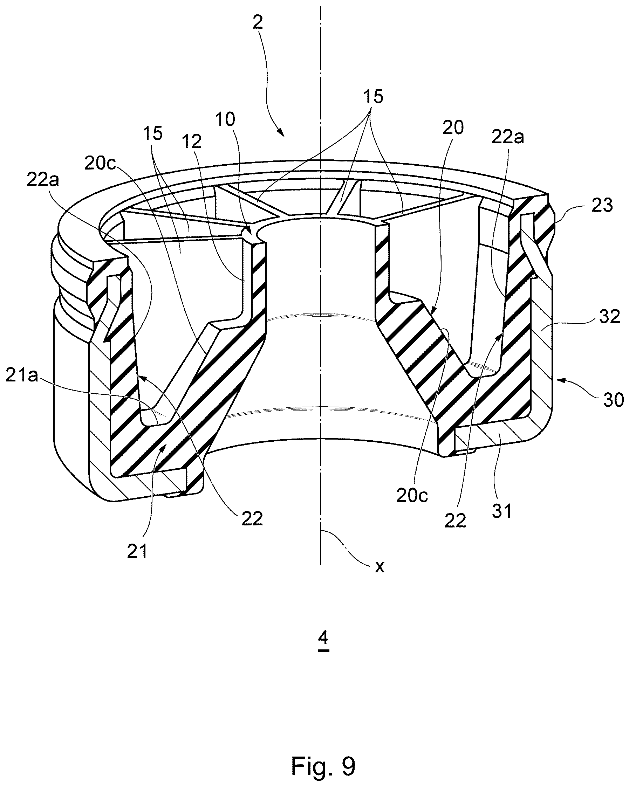

Next, a modification example of the sealing device 3 according to the second embodiment of the present invention will be described. Figure 9 is a partial perspective view illustrating a part of a sealing device 4 according to the modification example of the sealing device 3 according to the second embodiment of the present invention. Figure 9 illustrates a part of the sealing device 4 which is cut in a plane along the axis line x. As illustrated in Figure 9, in the sealing device 4, a form of a rib is different from that of the above-described sealing device 3. As for a rib 15 of the sealing device 3, as illustrated in Figure 9, the rib extends to a portion between the outer peripheral surface 12 of the seal lip 10 and the inner peripheral surface 22a of the cover portion 22. In other words, the rib 15 extends among the outer peripheral surface 12 of the seal lip 10, the outer peripheral surface 20c of the root portion 20, the inner peripheral surface 22a of the cover portion 22, and the inner side surface 21a of the base portion 21.

In the sealing device 4, the rib 15 supports the root portion 20 and the seal lip 10 from the outer periphery side and pushes the root portion 20 and the seal lip 10 in a direction toward the axis line x. Accordingly, in the usage state, tightening force, which causes the seal lip 10 to follow the guide member 102 subjected to a displacement such as eccentricity, occurs in the root portion 20 and the seal lip 10. Thus, followability of the seal lip 10 to the guide member 102 can be improved. Accordingly, even in a case where a deviation is occurring between the central axis of the guide member 102 and the central axis of the opening portion 104 of the guide member 103 in the cooling passage 101, the sealing performance of the seal lip 10 can further be inhibited from lowering. Further, because the root portion 20 and the seal lip 10 are supported by the ribs 15, rigidity of the root portion 20 and the seal lip 10 can be enhanced, the root portion 20 and the seal lip 10 are less likely to be deformed even when the root portion 20 and the seal lip 10 receive a pressure of the fluid, and pressure resistance of the root portion 20 and the seal lip 10 can be improved. Further, the sealing device 4 exhibits working and effects of the above-described sealing device 1.

In the foregoing, the present invention is described based on the above embodiments, but the technical scope of the present invention is not limited to the scope described in the above embodiments. It is clear for a person skilled in the art that various changes or improvements can be applied to the above embodiments. It is clear from descriptions of the claims that forms in which such changes or improvements are applied can be included in the technical scope of the present invention.

The embodiments described in the foregoing are for facilitating understanding of the present invention but are not for limited interpretation of the present invention. Further, the above-described embodiments do not limit application targets to which the present invention is applied and can include all articles usable by the present invention as the application targets of the above-described embodiments. Each configuration element included in the above embodiments and its arrangement, material, condition, shape, size, and so forth are not limited to those raised as examples and can appropriately be changed. For example, the present invention includes differences that occur in practical applications such as tolerance in manufacture. Further, within the scope in which no technical contradiction occurs, the configuration elements mentioned in the different embodiments can partially be substituted or combined. Further, configurations can appropriately selectively be combined such that at least a part of the above-described objects and effects are exhibited.

### Reference Signs List

1, 3, 4 sealing device, 2 elastic body portion,
10 seal lip, 10ainternal end, 10b root end, 11 seal surface, 12 outer peripheral surface, 13 opening, 14, 15 rib (support portion), 20 root portion, 20a inner peripheral surface, 20b end surface, 20c outer peripheral surface, 21 base portion, 21a inner side surface, 22 cover portion, 22a inner peripheral surface, 23 gasket portion, 23a seal surface, 23b tip end,
30 reinforcement ring, 31 circular ring portion,
31a inner periphery end, 32 tubular portion, 32a outer peripheral surface, 32b tip end portion,
100 cooling device, 101 cooling passage, 102, 103 guide member, 102a outer peripheral surface, 104 opening portion, 104a inner peripheral
surface, F insertion force, L length, P contact
surface pressure, R radius, T thickness, S1, S2 internal space, x axis line, α interference

## Claims

1. A sealing device for sealing a portion between a first guide member as a member which guides a fluid and a second guide member as a member which has an opening portion housing the first guide member and guides the fluid, the sealing device comprising
an elastic body portion as a portion that is annular around an axis line and is formed with an elastic body, wherein
the elastic body portion has a seal lip as a portion which is annular around the axis line,
the seal lip is configured to contact the first guide member inserted into the seal lip,
an interference of the seal lip with respect to the first guide member inserted into the seal lip has such a size that insertion of the first guide member into the seal lip becomes easy, and
the seal lip is a tubular portion extending along the axis line.

2. The sealing device according to claim 1, wherein
a length of the seal lip in the axis line direction is longer than a size of foreign matter potentially present between the first guide member inserted into the seal lip and the seal lip.

3. The sealing device according to claim 1, wherein
the seal lip extends in parallel with the axis line.

4. The sealing device according to claim 3, wherein
the seal lip is a cylindrical portion with the axis line as a central axis.

5. The sealing device according to claim 2, wherein
the foreign matter includes at least either one of spherical foreign matter and fibrous foreign matter.

6. The sealing device according to claim 1, wherein
the interference and a thickness of the seal lip are set such that insertion of the first guide member into the seal lip becomes easy.

7. The sealing device according to claim 6, wherein
the interference and the thickness of the seal lip are set such that when the seal lip is deformed and a center of an end portion, which opens, of the seal lip is deviated from the axis line, insertion of the first guide member into the seal lip becomes easy.

8. The sealing device according to claim 1, wherein
the elastic body portion has a support portion as a portion for exerting tightening force on the seal lip.

9. The sealing device according to claim 8, wherein
the support portion is provided as a plurality of ribs extending along the axis line.

10. The sealing device according to claim 1, wherein
the elastic body portion has a root portion as a portion in which the seal lip protrudes,
the root portion is annular around the axis line, and
a thickness of the root portion is larger than a thickness of the seal lip.

11. The sealing device according to claim 1, wherein
the elastic body portion has a gasket portion as a portion which is annular around the axis line and contacts the opening portion, and
the seal lip is positioned on an inner periphery side relative to the gasket portion.

12. The sealing device according to claim 1, wherein
the first guide member and the second guide member are members of a cooling device for an inverter device.
